(19) **Europäisches Patentamt**
**European Patent Office**
**Office européen des brevets**

(11) **EP 1 885 120 A2**

(12) **EUROPEAN PATENT APPLICATION**

(43) Date of publication:
06.02.2008 Bulletin 2008/06

(51) Int Cl.:
*H04N 5/232* (2006.01)

(21) Application number: 07113480.3

(22) Date of filing: 31.07.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **01.08.2006 KR 20060072491**

(71) Applicant: **Samsung Electronics Co., Ltd.**
**Suwon-si**
**Gyeonggi-do (KR)**

(72) Inventor: **Kim, Hee-Jung**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for taking moving picture in portable terminal**

(57) Provided are an apparatus and a method for taking a moving picture in a portable terminal. The apparatus includes a camera unit taking a moving picture frame; a compressor compressing the moving picture frame taken by the camera unit; a margin measurer ascertaining whether a size of the moving picture frame compressed by the compressor is being increased, and if the size of the moving picture frame is being increased, calculating an increased margin; and a picture taking ending determiner ending taking the moving picture frame if a size obtained through an addition of the increased margin to a whole size of the moving picture frame compressed and accumulated by the compressor is greater than a predetermined size.

FIG.2

**Description**

**PRIORITY**

This application claims priority under 35 U.S.C. § 119 to an application filed in the Korean Intellectual Property Office on August 1, 2006 and assigned Serial No. 2006-72491, the contents of which are incorporated herein by reference.

**BACKGROUND OF THE INVENTION**

1. Field of the Invention

The present invention relates generally to an apparatus and a method for taking a moving picture in a portable terminal, and in particular, to an apparatus and a method for taking a moving picture to be attached to a multimedia message to a size approximate to a size set by rules in a portable terminal.

2. Description of the Related Art

Portable terminals such as mobile communication terminals, Personal Digital Assistants (PDAs), etc, are widely used. Such a portable terminal is used for a simple telephone call, a schedule management, etc. The portable terminal is also used to take an image or a moving picture through a digital camera installed therein, view a satellite broadcast, edit a document, play a game, execute a navigation, and transmit and/or receive a multimedia message with the image or moving picture. Thus, the utility range of the portable terminal expands gradually.

If a moving picture is taken to be transmitted through a Multimedia Message Service (MMS) in a conventional portable terminal, a generated video file must not exceed a predetermined size so as to be suitable for transmission standards. For this purpose, every moving picture frame taken is compressed, and then sizes of the compressed moving picture frames are accumulated to calculate a whole file size. If the whole file size approximates a size determined according to the transmission standards, taking the moving picture is ended.

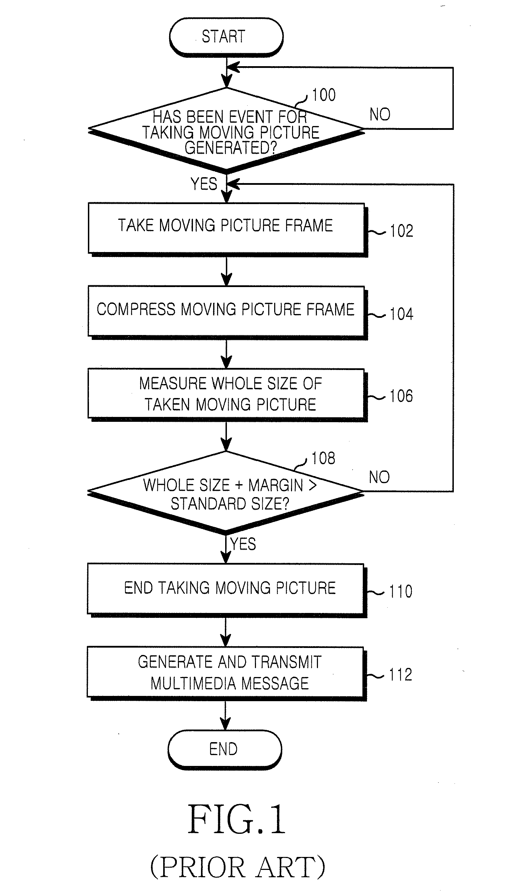

FIG. 1 is a flowchart of a method of taking a moving picture to be attached to a multimedia message in a conventional portable terminal. Referring to FIG. 1, in step 100, the conventional portable terminal determines whether an event for taking a moving picture to be attached to a multimedia message has been generated. If it is determined in step 100 that the event has been generated, the conventional portable terminal proceeds to step 102 to take a moving picture frame. The conventional portable terminal goes to step 104 to compress, accumulate, and store the moving picture frame. In step 106, the conventional portable terminal measures a whole size of the moving picture frame. In step 108, the conventional portable terminal determines whether a value obtained through an addition of a margin of a predetermined size to the whole size is greater than a standard size.

If it is determined in step 108 that the value is not greater than the standard size, the conventional portable terminal returns to step 102 to continuously take the moving picture frame. If it is determined in step 108 that the value is greater than the standard size, the conventional portable terminal proceeds to step 110 to end taking the moving picture frame. In step 112, the conventional portable terminal generates and transmits a multimedia message with the moving picture.

As described with reference to FIG. 1, an apparatus for taking a moving picture in a conventional portable terminal ends taking the moving picture when a value obtained through an addition of a margin to a whole size of the moving picture is greater than a standard size, so as to obtain a moving picture having a size approximate the standard size. When a moving picture frame is compressed, the moving picture frame is further complicated and has a different image from a previous moving picture frame due to the compression characteristic. Thus, a size of the compressed moving picture frame is not uniform. As a result, a margin greater than the size of the compressed moving picture frame is pre-determined so that a whole size of the moving picture frame is not greater than a standard size.

Accordingly, if the margin is pre-determined to be small, a whole size of a moving picture which is being taken may be greater than the standard size. Also, if the margin is pre-determined to be great, the whole size of the moving picture may be reduced.

**SUMMARY OF THE INVENTION**

An aspect of the present invention is to substantially solve at least the above problems and/or disadvantages and to provide at least the advantages below. Accordingly, an aspect of the present invention is to provide an apparatus and a method for taking a moving picture in a portable terminal.

Another aspect of the present invention is to provide an apparatus and a method for taking a moving picture to be attached to a multimedia message in a portable terminal.

A further aspect of the present invention is to provide an apparatus and a method for taking a moving picture to be attached to a multimedia message to a size approximate a size set by rules in a portable terminal.

According to one aspect of the present invention, there is provided an apparatus for taking a moving picture in a portable terminal, including a camera unit taking a moving picture frame; a compressor compressing the moving picture frame taken by the camera unit; a margin measurer ascertaining whether a size of the moving picture frame compressed by the compressor is being increased, and if the size of the moving picture frame is being increased, measuring an increased margin; and a picture taking ending determiner ending taking the moving picture frame if a size obtained through an addition of the increased margin to a whole size of the moving picture frame compressed and accumulated by the compressor is greater than a standard size.

According to another aspect of the present invention, there is provided a method of taking a moving picture in a portable terminal, including taking a moving picture frame; compressing the moving picture frame; ascertaining whether a size of the compressed moving picture frame is being increased; if it is ascertained that the size of the compressed moving picture frame is being increased, measuring a number of consecutive compressed moving picture frames of which sizes have been increased; measuring an increased margin in consideration of the number of consecutive compressed moving picture frames; and if a size obtained through an addition of the increased margin to a whole size of a compressed and accumulated moving picture is greater than a standard size, ending taking the moving picture frame.

**BRIEF DESCRIPTION OF THE DRAWINGS**

The above and other objects, features and advantages of the present invention will become more apparent from the following detailed description when taken in conjunction with the accompanying drawings in which:

FIG. 1 is a flowchart of a method of taking a moving picture to be attached to a multimedia message in a conventional portable terminal;

FIG. 2 is a block diagram of an apparatus for taking a moving picture to a size approximate to a size set by rules in a portable terminal, according to the present invention; and

FIG. 3 is a flowchart of a method of taking a moving picture to be attached to a multimedia message in a portable terminal, according to the present invention.

**DETAILED DESCRIPTION OF THE PREFERRED EMBODIMENTS**

Preferred embodiments of the present invention will be described herein below with reference to the accompanying drawings. In the following description, well-known functions or constructions are not described for clarity and conciseness.

The present invention provides an apparatus and a method for adjusting a size of a margin as a standard for ending taking a moving picture so as a moving picture to be attached to a multimedia message approximates a size set by rules in a portable terminal.

A characteristic of a moving picture frame will be described hereby prior to the description of the present invention. Complexity of the moving picture frame has a high probability of being continuously increased with a tendency to increase in size. However, the complexity of the moving picture frame has a high probability of being continuously decreased with a tendency to decrease in size. Also, the complexity of the moving picture frame is generally progressively increased or decreased. Thus, if such a moving picture frame is compressed, a currently compressed moving picture frame is compared in size with a previously compressed moving picture frame according to a compression characteristic. If it is determined that the sizes of the compressed moving picture frames have been increased, it may be determined that the complexity of the moving picture frame has been increased and has a high probability of being further increased. If it is determined that the sizes of the compressed moving picture frames are decreased, it may be determined that the complexity of the moving picture frame has a high probability of being further decreased. Therefore, in the present invention, a size of a margin will be adjusted using such a characteristic of a moving picture frame.

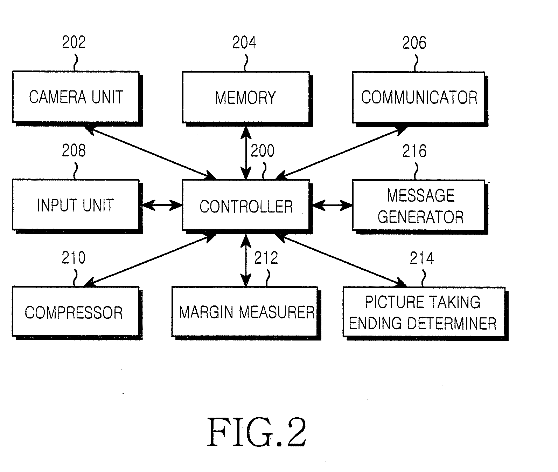

FIG. 2 is a block diagram of an apparatus for taking a moving picture to a size approximate a size set by rules in a portable terminal, according to the present invention. Referring to FIG. 2, the portable terminal includes a controller 200, a camera unit 202, a memory 204, a communicator 206, an input unit 208, a compressor 210, a margin measurer 212, a picture taking ending determiner 214, and a message generator 216.

The camera unit 202 is controlled by the controller 200 to photoelectrically convert an optical phase incident on a charge-coupled device (CCD) to an electrical signal during taking an image or a moving picture. The memory 204 stores the moving picture taken by the camera unit 202.

The communicator 206 downconverts a radio frequency (RF) signal received through an antenna (not shown) to perform dispreading and channel decoding on the RF signal during receiving. However, the communicator 206 also performs channel coding and spreading on the RF signal, upconverts the RF signal, and transmits the RF signal through the antenna during transmitting. The communicator 206 also transmits a multimedia message generated by the message generator 216.

The input unit 208 includes a plurality of keys or touch screens, senses an input from a user, and provides the input to the controller 200.

The compressor 210 compresses a frame of the moving picture taken by the camera unit 202 by using a Moving Picture Experts Group (MPEG) or H.263 codec.

The margin measurer 212 ascertains whether a size of the frame of the moving picture is being increased, wherein the size of the frame indicates a complexity of the frame of the moving picture compressed by the compressor 210. The margin measurer 212 also measures an increased or decreased margin in consideration of a number of consecutive moving picture frames of which sizes have been increased or a number of moving picture frames of which sizes have not been increased.

The picture taking ending determiner 214 determines whether a size obtained through an addition of the measured margin to a whole size of the moving picture compressed and accumulated by the compressor 210 is greater than a standard size attachable to the multimedia message to determine whether taking the moving picture is to be ended.

The message generator 216 generates the multimedia message including a moving picture taken up to the ending of taking the moving picture and data input through the input unit 208.

The controller 200 controls the compressor 210, the margin measurer 212, the picture taking ending determiner 214, and the message generator 216. In other words, the controller 200 may control functions of the compressor 210, the margin measurer 212, the picture taking ending determiner 214, and the message generator 216. In the present invention, the compressor 210, the margin measurer 212, the picture taking ending determiner 214, and the message generator 216 are separately constituted to separately describe each of their functions. Thus, a real product of the portable terminal may be implemented so that the controller 200 may perform all functions of the compressor 210, the margin measurer 212, the picture taking ending determiner 214, and the message generator 216, or the controller 200 may perform only some functions thereof.

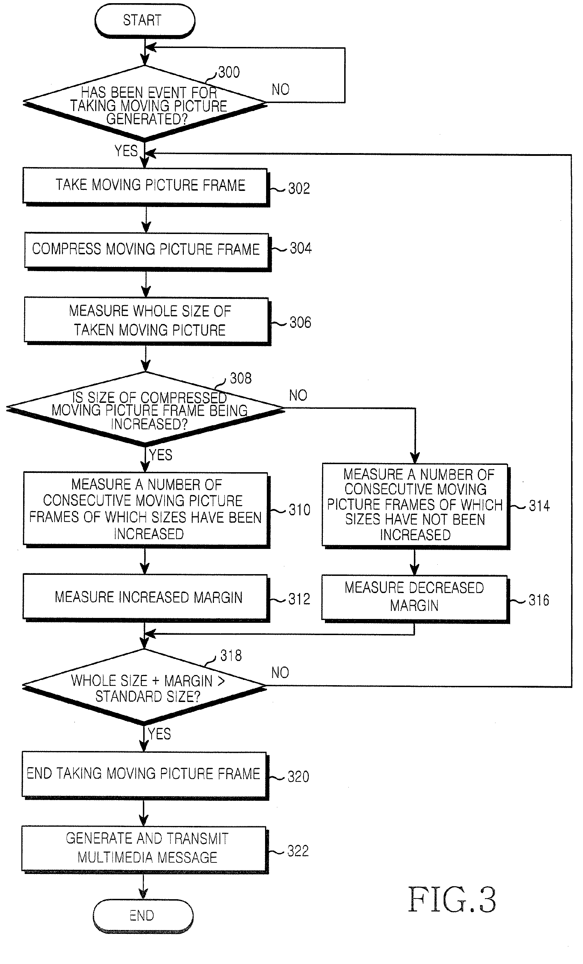

FIG. 3 is a flowchart of a method of taking a moving picture to be attached to a multimedia message in a portable terminal, according to the present invention.

Referring to FIG. 3, in step 300, the portable terminal according to the present embodiment perceives whether an event for taking a moving picture to be attached to a multimedia message has been generated. If it is sensed in step 300 that the event has been generated, the portable terminal proceeds to step 302 to take a moving picture frame. In step 304, the portable terminal compresses, accumulates, and stores the moving picture frame. In step 306, the portable terminal measures a whole size of the moving picture frame. In step 308, the portable terminal compares a size of the compressed moving picture frame with a size of an immediately previous moving picture frame to determine whether the size of the compressed moving picture frame has been increased.

If it is determined in step 308 that the size of the compressed moving picture frame has been increased, the portable terminal goes to step 310 to measures a number of consecutive moving picture frames of which sizes have been recently increased. In step 312, the portable terminal calculates an increased margin obtained when the size of the moving picture frame is increased.

The increased margin may be calculated using Equation (1):

$$\alpha\_new = \alpha\_old + \beta \times C\_com \ (C\_com \leftarrow C\_\max; \ if \ C\_com > C\_\max)$$
$$M\_inc = FR\_\max \times \alpha\_new \qquad \ldots(1)$$

wherein $\alpha$\_**new** denotes a weight of a margin, $\alpha$\_**old** denotes a weight of a margin in a previous step, $\beta$ denotes a predetermined counter weight, **C_max** denotes a maximum value of a counter value, **C_com** denotes a number of consecutive moving picture frames of which sizes have been recently increased and has a value of **C_max** if **C_com** is greater than **C_max, M_inc** denotes an increased margin, and **FR_max** denotes a greatest one of sizes of compressed moving picture frames.

If it is determined in step 308 that the size of the compressed moving picture frame has not been increased, the portable terminal goes to step 314 to measures a number of consecutive moving picture frames of which sizes have not been recently increased. In step 316, the portable terminal calculates a decreased margin obtained when the size of the moving picture frame is not increased.

The decreased margin may be calculated using Equation (2):

$$\alpha \_ new = \alpha \_ old + \beta \times C \_ sim \, (C \_ sim \leftarrow C \_ \max; \; if \; C \_ sim > C \_ \max)$$
$$M \_ dec = FR \_ \max \times \alpha \_ new$$
$$\dots (2)$$

wherein α_**new** denotes a weight of a margin, α_**old** denotes a weight of a margin in a previous step, β denotes a predetermined counter weight, **C_max** denotes a maximum value of a counter value, **C_sim** denotes a number of consecutive moving picture frames of which sizes have not been recently increased and has a value of **C_max** if **C_sim** is greater than **C_max, M_dec** denotes an decreased margin, and **FR_max** denotes a greatest one of sizes of compressed moving picture frames.

An initial value of the margin weight α_**new** and the predetermined counter weight β for measuring the increased or decreased margin are determined through an experiment. In the present invention, the initial value of the margin weight α_**new** is set to 1.3, and the predetermined counter weight β is set to 0.01.

In step 318, the portable terminal determines whether a value obtained through an addition of the increased or decreased margin to the whole size of the moving picture is greater than a standard size.

If it is determined in step 318 that the value is not greater than the standard size, the portable terminal returns to step 302 to continuously take the moving picture frame. If it is determined in step 318 that the value is greater than the standard size, the portable terminal proceeds to step 320 to end taking the moving picture frame. In step 322, the portable terminal generates and transmits a multimedia message with the moving picture.

As described above, in an apparatus and a method for taking a moving picture in a portable terminal according to the present invention, a size of a margin as a standard for ending taking the moving picture can be adjusted. Thus, the moving picture to be attached to a multimedia message can be taken to a size approximate a size set by rules in the portable terminal.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the spirit and scope of the invention as defined by the appended claims.

**Claims**

1.　An apparatus for taking a moving picture in a portable terminal, comprising:

　　a camera unit (202) for taking a moving picture frame;
　　a compressor (210) compressing the moving picture frame;
　　a margin measurer (212) ascertaining whether a current size of the compressed moving picture frame is being increased, and if the current size is being increased, calculating an increased margin; and
　　a picture taking ending determiner (214) ending taking the moving picture frame if a high size obtained through an addition of the increased margin to a whole size of the moving picture frame compressed and accumulated by the compressor (210) is greater than a predetermined size.

2.　The apparatus of claim 1, wherein the increased margin is calculated by the margin measurer (212) according to:

$$\alpha \_ new = \alpha \_ old + \beta \times C \_ com \, (C \_ com \leftarrow C \_ \max; \; if \; C \_ com > C \_ \max)$$
$$M \_ inc = FR \_ \max \times \alpha \_ new$$

wherein α_**new** denotes a weight of a margin, α_**old** denotes a weight of a margin in a previous step, β denotes a predetermined counter weight, **C_max** denotes a maximum value of a counter value, **C_com** denotes a number of consecutive moving picture frames of which sizes have been recently increased and has a value of **C_max** if **C_com** is greater than **C_max**, **M_inc** denotes the increased margin, and **FR_max** denotes a greatest one of sizes of compressed moving picture frames.

3. The apparatus of claim 1, wherein:

the margin measurer (212) calculates a decreased margin if the current size is not being increased; and
the picture taking ending determiner (214) ends taking the moving picture frame if a low size obtained through an addition of the decreased margin to the whole size is greater than the predetermined size.

4. The apparatus of claim 3, wherein the decreased margin is calculated by the margin measurer (212) according to:

$$\alpha\_new = \alpha\_old + \beta \times C\_sim \, (C\_sim \leftarrow C\_\max; \; if \, C\_sim > C\_\max)$$
$$M\_dec = FR\_\max \times \alpha\_new$$

wherein α_**new** denotes a weight of a margin, α_**old** denotes a weight of a margin in a previous step, β denotes a predetermined counter weight, **C_max** denotes a maximum value of a counter value, **C_sim** denotes a number of consecutive moving picture frames of which sizes have not been recently increased and has a value a value of **C_max** if **C_sim** is greater than **C_max, M_dec** denotes the decreased margin, and **FR_max** denotes a greatest one of sizes of compressed moving picture frames.

5. A method of taking a moving picture in a portable terminal, comprising:

taking a moving picture frame (302);
compressing the moving picture frame (304);
ascertaining whether a current size of the compressed moving picture frame is being increased (308);
if it is ascertained that the current size is being increased, measuring a number of consecutive compressed moving picture frames of which sizes have been increased (310);
calculating an increased margin in consideration of the number of consecutive compressed moving picture frames (312); and
if a high size obtained through an addition of the increased margin to a whole size of a compressed and accumulated moving picture is greater than a predetermined size (318), ending taking the moving picture frame (320).

6. The method of claim 5, wherein the increased margin is calculated according to:

$$\alpha\_new = \alpha\_old + \beta \times C\_com \, (C\_com \leftarrow C\_\max; \; if \, C\_com > C\_\max)$$
$$M\_inc = FR\_\max \times \alpha\_new$$

wherein α_**new** denotes a weight of a margin, α_**old** denotes a weight of a margin in a previous step, β denotes a predetermined counter weight, **C_max** denotes a maximum value of a counter value, **C_com** denotes a number of consecutive moving picture frames of which sizes have been recently increased and has a value of **C_max** if **C_com** is greater than **C_max, M_inc** denotes the increased margin, and **FR_max** denotes a greatest one of sizes of compressed moving picture frames.

7. The method of claim 5, further comprising:

if it is ascertained that the current size is not being increased, measuring a number of consecutive compressed moving picture frames of which sizes have not been increased (314);
calculating a decreased margin in consideration of the number of consecutive compressed moving picture frames (316); and
if a low size obtained through an addition of the decreased margin to the whole size is greater than the predetermined size (318), ending taking the moving picture frame (320).

8. The method of claim 7, wherein the decreased margin is calculated according to:

$$\alpha\_new = \alpha\_old + \beta \times C\_sim \, (C\_sim \leftarrow C\_\max; \; if \, C\_sim > C\_\max)$$
$$M\_dec = FR\_\max \times \alpha\_new$$

wherein α_**new** denotes a weight of a margin, α_**old** denotes a weight of a margin in a previous step, β denotes a predetermined counter weight, **C_max** denotes a maximum value of a counter value, **C_sim** denotes a number of consecutive moving picture frames of which sizes have not been recently increased and has a value a value of **C_max** if **C_sim** is greater than **C_max, M_dec** denotes the decreased margin, and **FR_max** denotes a greatest one of sizes of compressed moving picture frames.

9. A portable communication terminal for processing a moving picture, comprising:

    an apparatus according to any one of claims 1 to 4; and
    means for transmitting the moving picture frame.

10. A method of processing a moving picture in a portable communication terminal, comprising:

    the method according to any one of claims 5 to 8; and
    transmitting the moving picture frame (322).

11. A computer-readable recording medium having recorded thereon a program for taking a moving picture, comprising:

    a first code segment, for taking a moving picture frame;
    a second code segment, compressing the moving picture frame;
    a third code segment, ascertaining whether a current size of the compressed moving picture frame is being increased;
    a fourth code segment, if it is ascertained that the current size is being increased, measuring a number of consecutive compressed moving picture frames of which sizes have been increased;
    a fifth code segment, calculating an increased margin in consideration of the number of consecutive compressed moving picture frames; and
    a sixth code segment, if a high size obtained through an addition of the increased margin to a whole size of a compressed and accumulated moving picture is greater than a predetermined size, ending taking the moving picture frame.

START

HAS BEEN EVENT FOR
TAKING MOVING PICTURE
GENERATED? ⌐100

NO

YES

TAKE MOVING PICTURE FRAME ⌐102

COMPRESS MOVING PICTURE FRAME ⌐104

MEASURE WHOLE SIZE OF
TAKEN MOVING PICTURE ⌐106

WHOLE SIZE + MARGIN >
STANDARD SIZE? ⌐108

NO

YES

END TAKING MOVING PICTURE ⌐110

GENERATE AND TRANSMIT
MULTIMEDIA MESSAGE ⌐112

END

# FIG.1

(PRIOR ART)

202
CAMERA UNIT

204
MEMORY

206
COMMUNICATOR

208
INPUT UNIT

200
CONTROLLER

216
MESSAGE
GENERATOR

210
COMPRESSOR

212
MARGIN MEASURER

214
PICTURE TAKING
ENDING DETERMINER

FIG.2

START

300
HAS BEEN EVENT FOR
TAKING MOVING PICTURE
GENERATED?

NO

YES

TAKE MOVING PICTURE FRAME ~302

COMPRESS MOVING PICTURE FRAME ~304

MEASURE WHOLE SIZE OF
TAKEN MOVING PICTURE ~306

308
IS SIZE OF COMPRESSED
MOVING PICTURE FRAME BEING
INCREASED?

NO

YES

MEASURE A NUMBER OF
CONSECUTIVE MOVING PICTURE
FRAMES OF WHICH SIZES HAVE BEEN
INCREASED ~310

MEASURE A NUMBER OF
CONSECUTIVE MOVING
PICTURE FRAMES OF WHICH
SIZES HAVE NOT BEEN
INCREASED ~314

MEASURE INCREASED MARGIN ~312

MEASURE DECREASED
MARGIN ~316

318
WHOLE SIZE + MARGIN >
STANDARD SIZE?

NO

YES

END TAKING MOVING PICTURE FRAME ~320

GENERATE AND TRANSMIT
MULTIMEDIA MESSAGE ~322

END

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200672491